# EUROPEAN PATENT APPLICATION

(11) **EP 4 830 908 A1**
(43) Date of publication of application: **28.10.2026**
(21) Application number: 24906335.5
(22) Date of filing: 17.12.2024
(51) Int. Cl.: B29C 70/52, B29C 70/54, B29C 70/68, B29C 70/50

(54) **PULTRUSION-TUBE COILING FORMING METHOD AND SYSTEM**

(30) Priority: 20.12.2023 CN 202311764447
(71) Applicant: CRRC QINGDAO SIFANG CO., LTD., Qingdao, Shandong 266111 (CN)
(72) Inventor: CAO, Yazhou, Qingdao, Shandong 266111 (CN); ZHANG, Yadong, Qingdao, Shandong 266111 (CN); GE, Jiwen, Qingdao, Shandong 266111 (CN); CHEN, Xu, Qingdao, Shandong 266111 (CN)
(74) Representative: Prinz & Partner mbB
(86) International application number: PCT/CN2024/139883
(87) International publication number: WO 2025/130855

(57) **Abstract**

A pultrusion-tube coiling forming method and system. The pultrusion-tube coiling forming method comprises: rolling a plurality of carbon fiber material layers into a carbon fiber roll material; injecting and impregnating an epoxy resin into the carbon fiber roll material, and performing heating and curing to prepare a carbon fiber composite profile; performing pultrusion on the heated and cured profile into a carbon fiber composite tube body (11); laying an appearance layer prepreg (12) onto the tube body (11); wrapping a vacuum auxiliary material onto the appearance layer prepreg (12), and performing heating and curing; and post-treating the heated and cured tube body to manufacture a carbon fiber composite handrail (10). According to the pultrusion-tube coiling forming method, the forming process is simple, and the forming efficiency is high; and a good appearance effect of the handrail (10) can be achieved, and compared with a stainless steel handrail, the handrail (10) can increase the overall rigidity and strength, and achieves 30% of weight reduction.

## Description

The present application claims priority to the Chinese Patent Application No. 202311764447.1, titled "METHOD AND SYSTEM FOR FORMING TUBE THROUGH ROLL WINDING AND PULTRUSION PROCESSES", filed on December 20, 2023 with the China National Intellectual Property Administration, which is incorporated herein by reference in its entirety.

### FIELD

The present application relates to the technical field of handrail forming, and in particular to a method for forming a tube through roll winding and pultrusion processes and a system for forming a tube through roll winding and pultrusion processes for carrying out the same.

### BACKGROUND

At present, a handrail inside a rail vehicle is usually made of 304 stainless steel tube through surface powder coating treatment. During assembly, the handrail is welded to top and bottom panels of various mounting seats to form an integrated unit. During the research, the inventor found that there are at least the following issues in the existing technologies: in the existing system, the handrail is manufactured through complex process, has the large weight, and is prone to rust in the interior of the handrail if it is made of metal material, which may significantly reduce the service life of the handrail.

Therefore, it is desired for those skilled in the art to provide a method for forming a tube through roll winding and pultrusion processes, which has a simple forming process and high forming efficiency, and can improve the overall stiffness and strength of the handrail and reduce the overall weight of the handrail.

### SUMMARY

An object of the present application is to provide a method and a system for forming a tube through roll winding and pultrusion processes. The method for forming the tube through roll winding and pultrusion processes has a simple molding process, high molding efficiency, and can improve the overall stiffness and strength of the handrail and reduce the overall weight of the handrail.

In order to achieve the object above, a method for forming a tube through roll winding and pultrusion processes is provided in the present application, including:
winding multiple carbon fiber material layers into a carbon fiber roll;
injecting and impregnating an epoxy resin into the carbon fiber roll and heating and curing to form a profile of carbon fiber composite material;
pultruding the heated and cured profile to form a carbon fiber composite tube body;
applying an appearance layer prepreg to the tube body;
wrapping the appearance layer prepreg with a vacuum auxiliary material and heating and curing; and
performing a post treatment on the heated and cured tube body to produce handrailcarbon fiber composite material.

In some embodiments, before the step of winding multiple carbon fiber material layers to form the carbon fiber roll, the method further includes:
applying the carbon fiber material to multiple fabrics to form multiple carbon fiber material layers, wherein multiple carbon fiber material layers include a 1200 g/m² quadraxial carbon fiber cloth, a 1000 g/m² unidirectional carbon fiber cloth, and a 1000 g/m² quadraxial carbon fiber cloth.

In some embodiments, the step of injecting and impregnating the epoxy resin into the carbon fiber roll and heating and curing to form the profile of carbon fiber composite material includes:
injecting and impregnating the epoxy resin and a mixture of curing agent and accelerator into the carbon fiber roll, separately; and
passing the carbon fiber roll through three heating zones to be heated and cured, wherein temperatures in the three heating zones increase sequentially.

In some embodiments, before the step of injecting and impregnating the epoxy resin and the mixture of curing agent and accelerator into the carbon fiber roll, the method further includes:
controlling an injection temperature of the mixture of curing agent and accelerator and an injection temperature of the epoxy resin to be below 60°C by a water cooling device so as to reduce a viscosity of the epoxy resin to a predetermined low threshold.

In some embodiments, before the step of applying the appearance layer prepreg to the tube body, the method further includes:
applying an adhesive film to an outer surface of the tube body;
wrapping the tube body, on which the adhesive film is applied, with a first porous-free isolation film and performing a vacuum compaction; and
removing the first porous-free isolation film.

In some embodiments, after the step of applying the appearance layer prepreg to the tube body, the method further includes:
inspecting a surface condition of the appearance layer prepreg on the tube body; and
determining that an applying effect of the appearance layer prepreg to the tube body meets preset requirements.

In some embodiments, the step of wrapping the appearance layer prepreg with the vacuum auxiliary material and heating and curing includes:
wrapping the tube body, on which the appearance layer prepreg is applied, with a second porous-free isolation film, wherein the second porous-free isolation film conforms to the appearance layer prepreg and the appearance layer prepreg is not exposed; and
placing a breathable felt and a vacuum bag on an outer side of the second porous-free isolation film, followed by vacuumizing and heating and curing.

A system for forming a tube through roll winding and pultrusion processes is further provided in the present application, which carries out the method for forming the tube through roll winding and pultrusion processes as mentioned above. The system for forming the tube through roll winding and pultrusion processes includes a carbon fiber composite tube manufacturing mechanism and an appearance layer winding and curing mechanism. The carbon fiber composite tube manufacturing mechanism includes a preforming mould, a forming mould assembly, and a pultrusion module. The preforming mould is configured to wind multiple carbon fiber material layers into a carbon fiber roll. The forming mould assembly is configured to inject and impregnate the epoxy resin into the carbon fiber roll and to perform heating and curing to form the profile of carbon fiber composite material. The pultrusion module is configured to pultrude the heated and cured profile to form the tube body of carbon fiber composite material. The appearance layer winding and curing mechanism includes an appearance layer applying module, an appearance layer heat curing module, and a post-treatment module. The appearance layer applying module is configured to apply the appearance layer prepreg to the tube body. The appearance layer heat curing module is configured to wrap the appearance layer prepreg with the vacuum auxiliary material and to perform heating and curing. The post-treatment module is configured to perform a post-treatment on the heated and cured tube body so as to produce handrailof carbon fiber composite material.

In some embodiments, the forming mould assembly includes an injection mould and a forming mould. The injection mould is configured to inject and impregnate the epoxy resin into the the carbon fiber roll. The forming mould and the injection mould are integrally formed. The forming mould is configured to heat and cure the carbon fiber roll impregnated with the epoxy resin so as to produce the profile of carbon fiber composite material.

In some embodiments, the carbon fiber composite tube manufacturing mechanism further includes a feeding rack and a cutting module. The feeding rack is configured to feed the carbon fiber material layers to the preforming mould, and the cutting module is configured to cut the tube body pultruded by the pultrusion module.

Compared with the related art above, the method for forming the tube through roll winding and pultrusion processes in the present application includes: winding multiple carbon fiber material layers into a carbon fiber roll; injecting and impregnating an epoxy resin into the carbon fiber roll and heating and curing to form a profile of carbon fiber composite material; pultruding the heated and cured profile to form a carbon fiber composite tube body; applying an appearance layer prepreg to the tube body; wrapping the appearance layer prepreg with a vacuum auxiliary material and heating and curing; and performing post treatment on the heated and cured tube body to produce a carbon fiber composite handrail. As can be seen, the method for forming the tube through roll winding and pultrusion processes of the present application is used to form the carbon fiber composite handrail. Specifically, the carbon fiber composite tube body is firstly formed by a resin injection and pultrusion forming process, and then the outer layer of the tube body is applied with an appearance layer for tube winding and curing formation. The method for forming the tube through roll winding and pultrusion processes in the present application has a simple forming process and high forming efficiency, which can not only achieve a good appearance effect of the handrail, but also improve the overall stiffness and strength and further reduce weight by 30% compared with the stainless steel handrail.

### BRIEF DESCRIPTION OF THE DRAWINGS

In order to provide a clearer explanation of the embodiments of the present application or the technical solutions in the prior art, a brief introduction will be given to the accompany drawings required for the description of the embodiments or the prior art. Obviously, the accompany drawings described below are only embodiments of the present application. For those skilled in the art, other accompany drawings can be obtained based on the provided accompany drawings without creative labor.
FIG. 1 is a flow chart of a method for forming a tube through roll winding and pultrusion processes according to an embodiment of the present application;
FIG. 2 is a schematic view showing size of a handrail according to an embodiment of the present application;
FIG. 3 is a schematic structural view of layers of the handrail according to an embodiment of the present application;
FIG. 4 is a schematic view of coating of an appearance layer of the handrail according to an embodiment of the present application;
FIG. 5 is a view showing a winding process of the handrail according to an embodiment of the present application; and
FIG. 6 is a schematic view of a carbon fiber composite tube manufacturing mechanism in a system for forming a tube through roll winding and pultrusion processes according to an embodiment of the present application.

Numeral references are listed below:
10 handrail, 11 tube body, 111 1000 g/m² quadraxial carbon fiber cloth, 112 1000 g/m² unidirectional carbon fiber cloth, 113 1200 g/m² quadraxial carbon fiber cloth, 12 appearance layer prepreg, 13 second porous-free isolation film, 14 breathable felt, 15 vacuum bag;
100 carbon fiber composite tube manufacturing mechanism, 101 feeding rack, 102 preforming mould, 103 forming mould assembly, 1031 injection mould, 1032 forming mould, 104 pultrusion module, 1041 traction unit, 105 cutting module.

### DETAILED DESCRIPTION OF THE EMBODIMENTS

Hereinafter, the technical solutions in the embodiments of the present application will be clearly and completely described in conjunction with the accompanying drawings. Obviously, the described embodiments are only a part of the embodiments of the present application, not all of them. Based on the embodiments of the present application, all other embodiments obtained by those skilled in the art without creative labor are within the protection scope of the present application.

In order for those skilled in the art to better understand the solutions of the present application, a further detailed explanation of the present application is provided below in conjunction with the accompanying drawings and specific implementation examples.

It should be noted that the directional terms such as "upper end, lower end, left side, right side" mentioned below are defined based on the accompanying drawings.

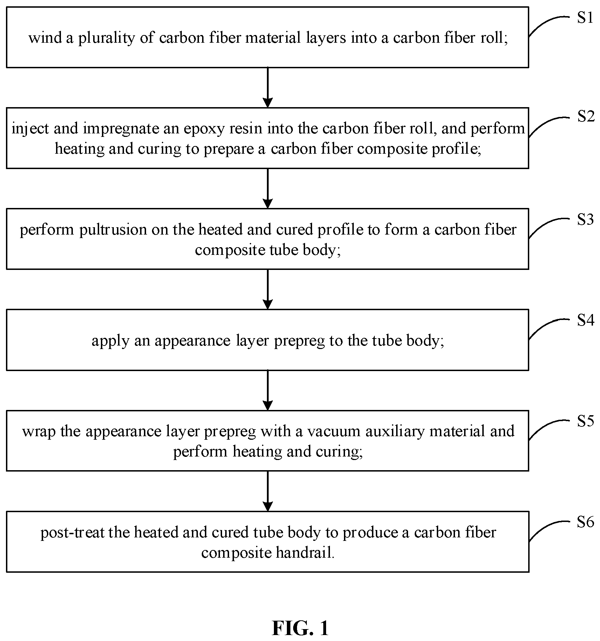

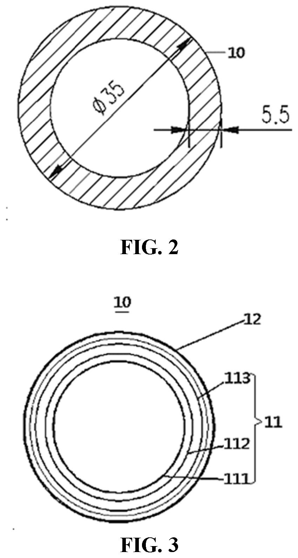

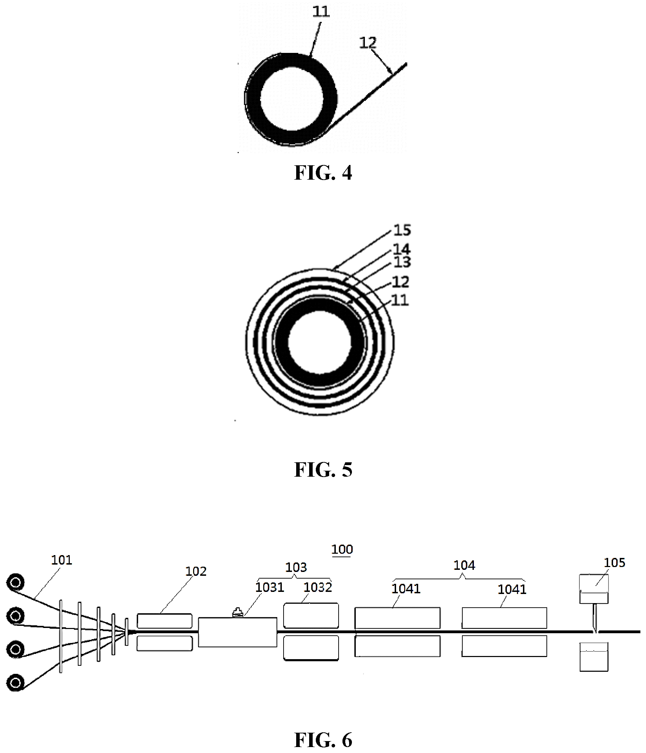

Refer to FIGS. 1 to 6. FIG. 1 is a flow chart of a method for forming a tube through roll winding and pultrusion processes according to an embodiment of the present application. FIG 2 is a schematic view showing size of a handrail according to an embodiment of the present application. FIG 3 is a schematic structural view of layers of the handrail according to an embodiment of the present application. FIG 4 is a schematic view of coating of an appearance layer of the handrail according to an embodiment of the present application. FIG 5 is a view showing a winding process of the handrail according to an embodiment of the present application. FIG 6 is a schematic view of a carbon fiber composite tube manufacturing mechanism in a system for forming a tube through roll winding and pultrusion processes according to an embodiment of the present application.

A method for forming a tube through roll winding and pultrusion processes is provided according to the embodiments of the present application, which includes:
S1: winding multiple carbon fiber material layers into a carbon fiber roll;
S2: injecting and impregnating epoxy resin into the carbon fiber roll, and heating and curing to form a profile of carbon fiber composite material;
S3: pultruding the heated and cured profile to form a carbon fiber composite tube body 11;
S4: laying an appearance layer prepreg 12 onto the tube body 11;
S5: wrapping the appearance layer prepreg 12 with a vacuum auxiliary material, followed by heating and curing;
S6: performing a post treatment on the heated and cured tube body 11 to produce a carbon fiber composite handrail 10.

As can be seen, the method for forming the tube through roll winding and pultrusion processes in the present application is used to form the carbon fiber composite handrail 10. Specifically, the carbon fiber composite tube body 11 is firstly formed by resin injection pultrusion forming process, and then an appearance layer is applied to the outer layer of the tube body 11 for tube winding and curing formation.

The method for forming the tube through roll winding and pultrusion processes according to the present application has a simple forming process and high forming efficiency, which can not only achieve a good appearance effect of the handrail 10, but also improve the overall stiffness and strength and further reduce weight by 30% compared with the stainless steel handrail.

In some embodiments, before the step of winding multiple carbon fiber material layers into the carbon fiber roll, the method includes:
laying the carbon fiber material onto multiple fabrics to form multiple carbon fiber material layers, including: a 1200 g/m² quadraxial carbon fiber cloth, a 1000 g/m² unidirectional carbon fiber cloth, and a 1000 g/m² quadraxial carbon fiber cloth.

The formed carbon fiber composite handrail 10 in this embodiment is a hollow tube structure, having an outer diameter of 35 mm and a wall thickness of 5.5 mm and a length of 1000 mm. In addition, the carbon fiber composite handrail 10 is laminated with a 1200 g/m² quadraxial carbon fiber cloth 113, a 1000 g/m² unidirectional carbon fiber cloth 112, and a 1000 g/m² quadraxial carbon fiber cloth 1000 111, with a fiber volume content of each layer being 62.8%. For example, the carbon fiber roll is layered from the inside to the outside with the 1000 g/m² quadraxial carbon fiber cloth 111, the 1000 g/m² unidirectional carbon fiber cloth 112, and the 1200 g/m² quadraxial carbon fiber cloth 113.

In some embodiments, the step of injecting and impregnating the epoxy resin into the carbon fiber roll and heating and curing to form the profile of carbon fiber composite material includes:
injecting and impregnating the epoxy resin and a mixture of curing agent and accelerator into the carbon fiber roll, separately; and
passing the carbon fiber roll through three heating zones to be heated and cured, with the temperatures in these three heating zones increasing sequentially.

In this embodiment, in order to ensure that the fiber material can be uniformly and fully filled with the two-component epoxy resin material, a resin injection impregnation method is adopted in this embodiment, while utilizing a three-stage heating method (120°C - 150°C - 160°C).

As an example, during resin injection, a curing agent and an accelerator of 10 kg are weighed by an electronic scale and are mixed at the ratio of 96:4. The mixture of curing agent and accelerator is injected into a pump B of an injection machine, and the epoxy resin is injected into a pump A of the injection machine. The pump A and the pump B are controlled to inject the resin and the curing agent into a mould synchronously, with the output flow rate of each of the pump A and the pump B being 50 g/min. During heating and curing, a heating plate is installed on the forming mould 1032, and a thermocouple is equipped, with an electrical cable being plugged into a socket at two ends of the heating plate. The machine is switched on, and the heating zones thereof are activated. The heating plate is divided into three curing zones. According to the process requirements, the temperature in the first curing zone is set to 120°C, the temperature in the second curing zone is set to 150°C, and the temperature in the third curing zone is set to 160°C.

In some embodiments, before the step of injecting and impregnating the epoxy resin and the mixture of curing agent and accelerator into the carbon fiber roll, the method further includes:
controlling an injection temperature of the mixture of curing agent and accelerator and an injection temperature of the epoxy resin to be below 60°C by a water cooling device so as to reduce a viscosity of the epoxy resin to a preset low value.

A water cooling area is provided in the resin injection section of the mould to control the viscosity of the epoxy resin. In operation, the water cooling device is switched on, and the coolant is circulated through the pipeline to cool the front end of the forming mould 1032. In this way, the temperature of the resin injection section of the mould is controlled below 60°C (The viscosity of the epoxy resin is the lowest under this temperature).

As such, the viscosity of the epoxy resin is reduced to the lowest value, so that the fiber material can be uniformly and fully filled with the epoxy resin, which ensures the forming quality of the carbon fiber composite handrail 10.

To ensure the curing degree of the carbon fiber composite product, in compliance with a Differential Scanning Calorimetry (DSC) curve of two-component epoxy resin, the pultrusion rate of the profile is set to 80-90 mm/min. The pultrusion module 104 is switched on, and the fiber and resin material are cured and formed according to the preset heating temperature and traction speed. Under the traction of the pultrusion module 104, the profile is pulled out of the mould.

As such, after the cutting process, the carbon fiber composite tube body 11 that meets the requirements can be produced.

In some embodiments, before the step of laying the appearance layer prepreg 12 onto the tube body 11, the method further includes:
laying an adhesive film onto an outer surface of the tube body 11;
wrapping the tube body 11, on which the adhesive film is applied, with a first porous-free isolation film and performing a vacuum compaction; and
removing the first porous-free isolation film.

It can be understood that a layer of adhesive film may be applied before laying the appearance layer prepreg 12 to ensure a sufficient resin content in the outer layer of the tube body 11.

Optionally, according to actual needs, before laying the adhesive film, the method further includes a surface polishing treatment on the cut carbon fiber composite tube body 11. As an example, the carbon fiber composite tube body 11 is first clamped and fixed on the grinding fixture, and the outer surface of the pultrusion handrail 10 is roughly ground by using a sandpaper with the grit number of around 120, and the outer surface of the carbon fiber composite tube body 11 is then finely ground by using a sandpaper with the grit number of 200 or higher until there is no gloss on the outer surface of the tube body 11. The overall surface should be smooth without protrusions or burrs. Finally, the outer surface of the tube body 11 is cleaned by using a wiping cloth and anhydrous ethanol until there is no grinding dust or other contaminants on the outer surface of the tube body 11.

Afterwards, the adhesive film that has a suitable cut-off size is laid on the outer surface of the tube body 11 (with one layer of adhesive film to be laid). A gap is provided at a joint of the adhesive film, and the joint seam is arranged parallel to an axis of the tube body 11. The joint seam has a width not greater than 0.5 mm. Overlapping, wrinkling, twisting, foreign matter inclusion and the like of the adhesive film are not allowed.

After the adhesive film is laid, the tube body 11 is wrapped with the first porous-free isolation film, and then subjected to a vacuum compaction process. The duration for vacuum compaction is not less than 15 minutes, and the vacuum degree is not higher than -0.090 MPa (before proceeding to the next step, the first porous-free isolation film used for vacuumizing shall be removed).

The appearance layer prepreg 12 is attached with a release paper at its back surface, and an isolation film at its front surface. During laying, the release paper is removed from the back surface firstly while keeping the isolation film on the front surface. After laying the appearance layer prepreg 12 onto the surface of the adhesive film, the isolation film is removed from the front surface of the appearance layer prepreg 12. A gap is provided at the joint of the appearance layer prepreg 12, and the joint seam is arranged parallel to the axis of the tube body 11. The joint seam has a width not larger than 0.3 mm. Overlapping, wrinkling, twisting, fiber disorder, foreign matter inclusion and the like of the appearance layer prepreg 12 are not allowed.

After the appearance layer prepreg 12 is laid, the tube body 11 is wrapped with a second porous-free isolation film 13 and subjected to a vacuum compaction process. The duration for vacuum compaction is not less than 15 minutes and the vacuum degree is not higher than -0.090 MPa.

In some embodiments, after the step of laying the appearance layer prepreg 12 onto the tube body 11, the method further includes:
inspecting the surface condition of the appearance layer prepreg 12 on the tube body 11; and
determining if the laying effect of the appearance layer prepreg 12 on the tube body 11 meets the preset requirements.

In that case, after the tube body 11 is wrapped with the second porous-free isolation film 13 and subjected to the vacuum compaction process, the vacuum auxiliary material (including the second porous-free isolation film 13) is removed for observing the surface condition of the appearance layer prepreg 12 and confirming if overlapping, wrinkling, twisting, fiber disorder, foreign matters and other defects occur on the appearance layer prepreg 12 and if the tube body 11 and the adhesive film are exposed.

In some embodiments, the step of wrapping the appearance layer prepreg 12 with the vacuum auxiliary material and then heating and curing includes:
wrapping the tube body 11, on which the appearance layer prepreg 12 is applied, with the second porous-free isolation film 13, and ensuring that the second porous-free isolation film 13 tightly conforming to the appearance layer prepreg 12 and the appearance layer prepreg 12 is not exposed; and
laying a breathable felt 14 and a vacuum bag 15 on the outer side of the second porous-free isolation film 13, followed by vacuumizing and heating and curing.

In that case, after confirming that the laying effect of the appearance layer prepreg 12 on the tube body 11 meets the preset requirements, the method further includes a bagmaking process before curing the appearance layer and a curing process of the appearance layer.

The requirements for bagmaking before curing the appearance layer are in that: during the process of making vacuum bag 15, a direct contact between the breathable felt 14 and the tube body 11 is not allowed. The distance between the breathable felt 14 and the tube body 11 is set at around 30 mm. The second porous-free isolation film 13 and the vacuum bag 15 should be entirely smooth, and the wrinkles, twisting, and the like on the vacuum auxiliary material should be minimized.

Curing the appearance layer: the tube body 11 after bagmaking is cured and formed in a curing oven, and the curing requirements are as follows:
a. Vacuum: vacuumizing during the entire process until the curing process is complete, with a vacuum degree being not larger than -0.095 MPa in the vacuum system. After the process is completed, stop vacuumizing while keeping the negative pressure.
b. Temperature: taking the air temperature as a reference, heating up to (90±5)°C at a rate of (90±5)°C/h and holding the temperature for 0.5 hour; further heating up to (130± 5)°C at a rate of (90±5)°C/h and holding the temperature for 2.0 hours; after the temperature preservation period ends, cooling down to be lower than 50°C at a rate of - (180±5)°C/h, and completing the curing process.
c. after the air temperature drops to the room temperature, detaching the connecting pipeline and removing the product out from the curing oven.

After the curing process of the appearance layer is completed, the method further includes a post-treatment of the cured product, including: removing the vacuum auxiliary material from the surface of the carbon fiber composite handrail 10 and removing the surrounding burrs and residual adhesive without any impact damage or serious surface scratches on the product surface.

A system for forming a tube through roll winding and pultrusion processes is provided in the present application, which adopts the method for forming a tube through roll winding and pultrusion processes described in the embodiments above. The system for forming a tube through roll winding and pultrusion processes includes: a carbon fiber composite tube manufacturing mechanism 100 and an appearance layer winding and curing mechanism.

The carbon fiber composite tube manufacturing mechanism 100 includes a preforming mould 102, a forming mould assembly 103, and a pultrusion module 104. The preforming mould 102 is used to wind multiple layers of carbon fiber material tinto a carbon fiber roll. The forming mould assembly 103 is used to inject and impregnate the epoxy resin into the carbon fiber roll which is heated and cured to form the profile of carbon fiber composite material. The pultrusion module 104 is used to pultrude the heate and cured profile to form the carbon fiber composite tube body 11.

The appearance layer winding and curing mechanism includes: an appearance layer laying module, an appearance layer heating and curing module, and a post-treatment module. The appearance layer laying module is used to lay the appearance layer prepreg 12 on the tube body 11. The appearance layer heating and curing module is used to wrap the appearance layer prepreg 12 with the vacuum auxiliary material and to perform heating and curing. The post-treatment module is used to perform a post-treatment on the heated and cured tube body 11 so as to produce the carbon fiber composite handrail 10.

Further, the forming mould assembly 103 includes an injection mould 1031 and a forming mould 1032. The injection mould 1031 is used to inject and impregnate the epoxy resin into the carbon fiber roll. The forming mould 1032 and the injection mould 1031 are integrally formed. The forming mould 1032 is used to heat and cure the carbon fiber roll impregnated with epoxy resin so as to produce the profile of carbon fiber composite material. The forming mould 1032 includes an upper molding plate and a lower molding plate. In order to ensure that the mould has a heat capacity for uniform and stable heating, a cross-section area of the forming mould 1032 is designed to be 10 times a cross-section area of the pultruded product.

The pultrusion module 104 may include one traction unit 1041 or at least two traction units 1041. For example, two traction units 1041 are provided for pultruding the tube body 11 at a suitable traction speed.

In addition, the carbon fiber composite tube manufacturing mechanism 100 further includes a feeding rack 101 and a cutting module 105. The feeding rack 101 is used to feed the carbon fiber material layers to the preforming mould 102. The cutting module 105 is located at a terminal end of the carbon fiber composite tube manufacturing mechanism 100. The cutting module 105 is used to cut the tube body 11 pultruded by the pultrusion module 104.

It should be noted that in this specification, the relationship terms such as first and second are only used to distinguish one entity from multiple other entities, which does not necessarily require or imply any actual relationship or order between these entities.

The above provides a detailed introduction to the method and system for forming the tube through roll winding and pultrusion processes provided in the present application. The specific examples are sued to explain the principles and implementation methods of the present application. The above examples are only used to help understand the method and core concept of the present application. It should be understood for those skilled in the art that multiple improvements and modifications can be made to the present application without departing from the principles of the present application, and these improvements and modifications also fall within the protection scope of the claims of the present application.

## Claims

1. A method for forming a tube through roll winding and pultrusion processes, comprising:
winding a plurality of carbon fiber material layers into a carbon fiber roll;
injecting and impregnating an epoxy resin into the carbon fiber roll and heating and curing to form a profile of carbon fiber composite material;
pultruding the heated and cured profile to form a tube body of carbon fiber composite material;
applying an appearance layer prepreg to the tube body;
wrapping the appearance layer prepreg with a vacuum auxiliary material and heating and curing; and
performing a post treatment on the heated and cured tube body to produce a handrailcarbon fiber composite material.

2. The method for forming the tube through roll winding and pultrusion processes according to claim 1, wherein, before the step of winding the plurality of carbon fiber material layers into the carbon fiber roll, the method further comprises:
applying carbon fiber material to a plurality of fabrics to form the plurality of carbon fiber material layers, wherein the plurality of carbon fiber material layers comprise a 1200 g/m² quadraxial carbon fiber cloth, a 1000 g/m² unidirectional carbon fiber cloth, and a 1000 g/m² quadraxial carbon fiber cloth.

3. The method for forming the tube through roll winding and pultrusion processes according to claim 1, wherein the step of injecting and impregnating the epoxy resin into the carbon fiber roll and heating and curing to form the profile of carbon fiber composite material, comprises:
injecting and impregnating the epoxy resin and a mixture of curing agent and accelerator into the carbon fiber roll, separately; and
passing the carbon fiber roll through three heating zones to be heated and cured, wherein temperatures in the three heating zones increase sequentially.

4. The method for forming the tube through roll winding and pultrusion processes according to claim 3, wherein, before the step of injecting and impregnating the epoxy resin and the mixture of curing agent and accelerator into the carbon fiber roll, the method further comprises:
controlling an injection temperature of the mixture of curing agent and accelerator and an injection temperature of the epoxy resin to be below 60°C by a water cooling device so as to reduce a viscosity of the epoxy resin to a predetermined low threshold.

5. The method for forming the tube through roll winding and pultrusion processes according to any one of claims 1 to 4, wherein, before the step of applying the appearance layer prepreg to the tube body, the method further comprises:
applying an adhesive film to an outer surface of the tube body;
wrapping the tube body, on which the adhesive film is applied, with a first porous-free isolation film around, and performing a vacuum compaction; and
removing the first porous-free isolation film.

6. The method for forming the tube through roll winding and pultrusion processes according to any one of claims 1 to 4, wherein, after the step of applying the appearance layer prepreg to the tube body, the method further comprises:
inspecting a surface condition of the appearance layer prepreg on the tube body; and
determining if an applying effect of the appearance layer prepreg to the tube body meets preset requirements.

7. The method for forming the tube through roll winding and pultrusion processes according to any one of claims 1 to 4, wherein the step of wrapping the appearance layer prepreg with the vacuum auxiliary material and heating and curing comprises:
wrapping the tube body, on which the appearance layer prepreg is applied, with a second porous-free isolation film, wherein the second porous-free isolation film conforms tightly to the appearance layer prepreg which is not exposed; and
placing a breathable felt and a vacuum bag on an outer side of the second porous-free isolation film, followed by vacuumizing, heating and curing.

8. A system for forming a tube through roll winding and pultrusion processes, which is configured to carry out the method for forming the tube through roll winding and pultrusion processes according to any one of claims 1 to 7, and comprises a carbon fiber composite tube manufacturing mechanism, and an appearance layer winding and curing mechanism,
wherein the carbon fiber composite tube manufacturing mechanism comprises a preforming mould, a forming mould assembly, and a pultrusion module,
wherein the preforming mould is configured to wind a plurality of carbon fiber material layers into a carbon fiber roll, the forming mould assembly is configured to inject and impregnate the epoxy resin into the carbon fiber roll and to perform heating and curing to form the profile of carbon fiber composite material, and the pultrusion module is configured to pultrude the heated and cured profile to form the tube body of carbon fiber composite material,
wherein the appearance layer winding and curing mechanism comprises an appearance layer applying module, an appearance layer heat curing module, and a post-treatment module,
wherein the appearance layer applying module is configured to apply the appearance layer prepreg to the tube body, the appearance layer heat curing module is configured to wrap the appearance layer prepreg with the vacuum auxiliary material and to perform heating and curing, and the post-treatment module is configured to perform a post-treatment on the heated and cured tube body to produce a handrail of carbon fiber composite material.

9. The system for forming the tube through roll winding and pultrusion processes according to claim 8, wherein the forming mould assembly comprises:
an injection mould; and
a forming mould,
wherein the injection mould is configured to inject and impregnate the epoxy resin into the carbon fiber roll, wherein the forming mould and the injection mould are integrally formed, and the forming mould is configured to heat and cure the carbon fiber roll impregnated with the epoxy resin so as to produce the profile of carbon fiber composite material.

10. The system for forming the tube through roll winding and pultrusion processes according to claim 8, wherein the carbon fiber composite tube manufacturing mechanism further comprises:
a feeding rack; and
a cutting module,
wherein the feeding rack is configured to feed the carbon fiber material layers to the preforming mould, and the cutting module is configured to cut the tube body pultruded by the pultrusion module.
